# EUROPÄISCHE PATENTSCHRIFT

(11) **EP 2 179 835 B1**
(45) Veröffentlichungstag und Bekanntmachung des Hinweises auf die Patenterteilung: **01.10.2014**
(21) Anmeldenummer: 09012441.3
(22) Anmeldetag: 01.10.2009
(51) Int. Cl.: B29C 47/92, B29C 45/78, G01N 29/024, B29C 45/77

(54) **Verfahren und Vorrichtung zur Messung der Temperatur eines plastifizierten Kunststoffs am Ausgang eines Extruders**
Method and device for measuring the temperature of a plasticized plastic at the exit of an extruder
Procédé et dispositif de mesure de la température d'une matière synthétique plastifiée au niveau de la sortie d'une extrudeuse

(30) Priorität: 22.10.2008 DE 102008052740; 09.01.2009 DE 102009004946
(43) Veröffentlichungstag der Anmeldung: 28.04.2010
(73) Patentinhaber: SIKORA AG, 28307 Bremen (DE)
(72) Erfinder: Sikora, Harald, 28357 Bremen (DE); Clausen, Torben, 28844 Weyhe (DE)
(74) Vertreter: Hauck Patent- und Rechtsanwälte

(56) Entgegenhaltungen:
- DE-A1- 19 944 709
- GB-A- 1 346 095
- JP-A- 1 195 013
- JP-A- 53 130 764
- US-A- 4 509 360
- US-A- 5 009 102
- US-A- 5 433 112
- US-A- 5 951 163
- US-A1- 2002 038 160
- MICHAELI W ET AL: "Ultrasonic investigations of the thermoplastics injection moulding process" POLYMER TESTING, ELSEVIER, Bd. 24, Nr. 2, 1. April 2005 (2005-04-01), Seiten 205-209, XP025280053 ISSN: 0142-9418 [gefunden am 2005-04-01]
- STRAET T ET AL: "ULTRASCHALLMESSUNGEN AN DUROPLASTISCHEN FORMMASSEN//ULTRASONIC MEASUREMENTS ON THERMOSET MOULDING COMPOUNDS" KUNSTSTOFFE INTERNATIONAL, CARL HANSER VERLAG, DE, Bd. 95, Nr. 7, 1. Januar 2005 (2005-01-01) , Seiten 73-77, XP008053921 ISSN: 0945-0084

## Beschreibung

Die Erfindung bezieht sich auf ein Verfahren und eine Vorrichtung zur kontaktlosen, nichtinvasiven Messung der Temperatur eines plastifizierten Kunststoffs am Ausgang eines Extruders nach den Patentansprüchen 1und 5.

Bei der Ummantelung von Kabeln oder dergleichen mit einem Kunststoffmaterial werden Extruder eingesetzt, die das Kunststoffmaterial plastifizieren und um einen Kern (Leiter) herumspritzen. Das Kunststoffmaterial wird durch Druck und Wärme im Extruder erweicht, damit es problemlos und ohne Einschlüsse auf den Kern aufgetragen werden kann. Zu diesem Zweck ist erwünscht, die Temperatur im plastifizierten Material zu ermitteln, um eine optimale Viskosität der Schmelze für den Extrusionsprozess zu erzielen. Ferner muss ein Verbrennen oder eine vorzeitige Vernetzung im Extruderkopf vermieden werden. Vielmehr soll der Vernetzungsprozess unmittelbar nach der Extrusion eintreten. Eine zuverlässige Temperaturmessung optimiert mithin den Produktionsprozess.

Es ist bekannt, bei derartigen Extrusionsprozessen die Temperatur bei unterschiedlichen Austrittsgeschwindigkeiten des Materials außerhalb des Extruderkopfes mit Hilfe eines Thermoelements zu messen. Diese Messung findet an einer begrenzten Stelle statt, und hat naturgemäß eine relativ lange Ansprechzeit. Das Thermoelement misst ausschließlich die Temperatur im Außenbereich der Schmelze. Ragt das Thermoelement hingegen in die Schmelze hinein, wird durch Gleitreibungseffekte die Temperaturbestimmung verfälscht. Außerdem beeinflusst das Thermoelement die Fließeigenschaften der Schmelze negativ.

Es ist auch bekannt, die Temperatur der Schmelze mit Hilfe eines Infrarotthermometers zu messen. Dadurch kann jedoch lediglich die Oberflächentemperatur der Schmelze bis zu einer Tiefe von wenigen Millimetern erfasst werden. Bei speziellen Füllern in der Schmelze wird die Messtiefe noch weiter verringert.

Eine möglichst genaue Erfassung der Massetemperatur von Kunststoffschmelzen kann jedoch helfen, den Produktionsoutput einer Extrusionsanlage deutlich zu erhöhen, indem durch die Wahl einer optimalen Temperatur unter anderem die Standzeit (z.B. Reinigung der Anlage, Reparatur usw.) der Anlage verkürzt wird.

Aus DE 199 44 709 A1 sind eine Vorrichtung und ein Verfahren zur Führung einer Polymerschmelze bekannt, bei denen ein Ultraschallsender und ein Ultraschallempfänger an der Schmelzeleitung angebracht sind und aus einem empfangenen Ultraschallimpuls ein Ausgangssignal zur Bestimmung eines Parameters der Polymerschmelze erzeugt wird. Aus US 2002/0038160 A1 sind eine Vorrichtung und ein Verfahren zur Onlineüberwachung und -steuerung eines fließenden Produkts bekannt, bei dem eine Produkttemperatur, ein Druck und eine Fließrate gesteuert werden und eine Schallgeschwindigkeit und Dämpfung unter diesen vorgegebenen Werten für Temperatur, Druck und Fließrate gemessen werden. Die gemessenen Werte der Schallgeschwindigkeit und Dämpfung werden verwendet, um Eigenschaften des Produkts vorherzusagen. Auf dieser Grundlage kann eine Regelung stattfinden. Aus US 5 433 112 A sind eine Vorrichtung und ein Verfahren bekannt zur Charakterisierung von Polymerschmelzen durch Ultraschallmessungen. Dabei sollen gleichzeitig die Ultraschallgeschwindigkeit und Dämpfung als eine Funktion der Zeit gemessen werden. Aus GB 1 346 095 A sind eine Vorrichtung und ein Verfahren für eine Regelung der Viskosität von insbesondere Polymerschmelzen bekannt. Dabei wird eine Messeinrichtung in einem Gehäuse in eine Bohrung eines die Schmelze führenden Kanals eingesetzt, wobei die Messeinrichtung nicht in den Kanal hineinragen soll. Aus JP 53130764 ist es bekannt, ein Harz kurz vor der Extrusion mit Schallwellen zu beaufschlagen und so die Knetbarkeit des Harzes zu beurteilen. Aus JP 01195013 ist es bei einem Spritzgussverfahren bekannt, die Temperatur der Schmelze mittels Ultraschallmessungen zu ermitteln und zu regeln.

Der Erfindung liegt die Aufgabe zugrunde, ein Verfahren und eine Vorrichtung zur Messung der Temperatur mindestens eines plastifizierten Kunststoffs am Ausgang eines Extruders anzugeben, das auf einfachere Weise eine genaue kontaktlose und nicht-invasive Temperaturmessung einer Schmelze ermöglicht.

Diese Aufgabe wird durch die Merkmale der Patentansprüche 1 und 5 gelöst.

Bei dem erfindungsgemäßen Verfahren wird für mindestens ein plastifiziertes Kunststoffmaterial die Funktion der Schallgeschwindigkeit in Abhängigkeit von der Temperatur gemessen und gespeichert. Während der Extrusion des Kunststoffmaterials wird die Schallgeschwindigkeit im Extruder gemessen, vorzugsweise quer zur Fließrichtung des Kunststoffmaterials und aus den Geschwindigkeitsmesswerten und der gespeicherten Funktion wird die jeweilige Temperatur bestimmt.

Die Erfindung geht von der Erkenntnis aus, dass die Schallgeschwindigkeit in Kunststoffschmelzen, insbesondere in Polyethylenschmelzen, eine starke Temperaturabhängigkeit zeigt. Unter Ausnutzung dieser Abhängigkeit kann über einen Rohrquerschnitt durch Bestimmung der mittleren Schallgeschwindigkeit die mittlere Massetemperatur der Kunststoffschmelze ermittelt werden.

Die hierbei verwendeten Ultraschallsensoren benötigen keinen Kontakt zur Kunststoffschmelze und erlauben auf diese Weise eine kontaktlose, nicht-invasive Bestimmung der mittleren Schallgeschwindigkeit und damit der mittleren Massetemperatur der Schmelze.

Die erfindungsgemäße Temperaturmessung ist in Echtzeit durchführbar, präzise und beeinträchtigt die Schmelze nicht. Da die Schallgeschwindigkeit quer durch die Schmelze hindurch gemessen wird, ist es auf diese Weise möglich, die mittlere Massetemperatur der Schmelze genau zu ermitteln.

Ein zusätzliches Thermoelement ragt bis unmittelbar an die Schmelze heran und misst so die Oberflächentemperatur der Schmelze im Randbereich des Rohrquerschnitts. Bei bekanntem Strömungsprofil der Schmelze können über die Oberflächentemperatur und die mittlere Massetemperatur Rückschlüsse über den Temperaturverlauf innerhalb des Rohrquerschnitts getroffen werden. Die Schallgeschwindigkeit in der Schmelze ist im gewissen Umfang auch vom Druck abhängig, so dass eine Druckkompensation erfolgen sollte. Zu diesem Zweck wird erfindungsgemäß über mindestens einen plastifizierten Kunststoff die Funktion der Schallgeschwindigkeit in Abhängigkeit vom Druck gemessen. Die Funktion wird gespeichert, und während der Extrusion erfolgt neben der Schallgeschwindigkeitsmessung eine Druckmessung. Auch hierbei wird naturgemäß nicht-invasiv verfahren. Aus den Messwerten und den gespeicherten Funktionen von Schallgeschwindigkeit und Druck wird dann eine druckkompensierte Temperatur der Schmelze ermittelt.

Bevor ein Extruder in die Produktion gehen kann, ist bekanntlich erforderlich, das Ausgangsmaterial ausreichend aufzuschmelzen, damit es als homogener Strang aus dem Extruderkopf austritt. Dies geschieht bekanntlich durch Aufheizung des Materials im Extruder, wobei während des Vortriebs im Extruder mit Hilfe einer Extruderschnecke eine weitere Erwärmung durch Reibung hervorgerufen wird. Durch Bestimmung der Temperatur der Kunststoffschmelze und Erstellung von extrudierten Proben von Zeit zu Zeit stellt der Maschinenführer fest, wann die Produktion eines Stranges in Gang gesetzt werden kann. Voraussetzung ist, dass das Material vollständig aufgeschmolzen ist und sich nicht noch Inseln nicht aufgeschmolzenen Materials darin befinden, welche die Qualität des zu erzeugenden Strangs beeinträchtigen. Der Maschinenführer beobachtet daher das zunächst probeweise extrudierte Material und entscheidet aus seiner Erfahrung, wann mit der Produktion begonnen werden kann.

Aus Gründen der Optimierung des Produktionsausstoßes ist man bestrebt, die Temperatur der Kunststoffschmelze im Extruder möglichst hoch zu halten, kurz unterhalb der Temperatur, bei der Verbrennungen oder Verkohlungen des Materials auftreten können. Dabei kann es insbesondere bei längerem Betrieb eines Extruders vorkommen, dass Partikel aus vernetztem oder verbranntem Material entstehen, durch die der produzierte Strang fehlerbehaftet wird. Derartige Partikel können bei Hochspannungskabeln die Durchschlagsfestigkeit beeinträchtigen. Bei Wasser- oder Gasrohren kann die Dichtigkeit der Rohrwand leiden.

Der Erfindung liegt daher die weitere Aufgabe zugrunde, ein Verfahren zum Betrieb eines Extruders zum Extrudieren eines Kunststoffmaterials zwecks Erzeugung eines Kunststoffstranges anzugeben, bei dem die Produktion des Extruders präziser gesteuert und die Erzeugung fehlerfreier Extrusionsprodukte gesichert werden kann.

Es kann während der anfänglichen Extrusion nahe oder am Kopf des Extruders in kurzen zeitlichen Abständen oder kontinuierlich die Ausbreitungsgeschwindigkeit von quer zur Fließrichtung des fließfähigen Materials gesendeter Schallwellen gemessen werden. Ein Kunststoffstrang wird erst dann produziert, wenn der Verlauf der Messwerte im Wesentlichen eine stetige Tendenz hat oder im Wesentlichen konstant ist.

Die Ausbreitungsgeschwindigkeit von Schallwellen im zu extrudierenden Material hängt nicht nur von seiner Temperatur ab, sondern auch davon, in welchem Zustand es sich befindet. Die Ausbreitungsgeschwindigkeit im ausschließlich flüssigen Zustand des Kunststoffmaterials ist messbar kleiner als die im Material, das sich im festen oder nur unvollständig plastifizierten Zustand befindet. Befinden sich daher beim Anfahren des Extruders in der Schmelze Partikel oder Inseln von noch nicht aufgeschmolzenem Material, macht sich dies durch Schwankungen in den Messwerten für die Ausbreitungsgeschwindigkeit der Schallwellen bemerkbar. Würde nämlich das Kunststoffmaterial bei der allmählichen Temperaturerhöhung gleichmäßig in Schmelze übergehen, würde die Temperatur allmählich ansteigen und die Schallgeschwindigkeit allmählich sinken. Die Messwerte hätten eine stetige Tendenz. Wandern hingegen feste Partikel oder Inseln durch den Messbereich, kommt es zu messbaren Schwankungen in der Ausbreitungsgeschwindigkeit. Daran wird erkannt, dass die Schmelze im oder am Extruderkopf noch keine hinreichende Homogenität aufweist, um mit der Produktion beginnen zu können. Umgekehrt kann die Produktion in Angriff genommen werden, sobald der Verlauf der Messwerte eine stetige Tendenz hat, zum Beispiel leicht abfallend oder konstant ist. Mithin wird dem Maschinenführer durch das erfindungsgemäße Verfahren ein Mittel in die Hand gegeben, um den Zeitpunkt der Produktion mit Hilfe des Extruders zu einem Zeitpunkt zu bestimmen, an dem frühestens fehlerfreie Erzeugnisse hergestellt werden können, ohne dass unnötig nicht verwendbares Material ausgestoßen wird. Erfahrungsgemäß wird dieses zwar später recycelt und ist nicht verloren, kann jedoch für die beabsichtigte Produktion zunächst nicht eingesetzt werden.

Der Verlauf der Messwerte kann durch geeignete Mittel zur Anzeige gebracht werden.

Während der Produktion kann kontinuierlich oder in kurzen zeitlichen Abständen die Ausbreitungsgeschwindigkeit von Schallwellen gemessen werden. Die Produktion wird gestoppt, wenn die Schwankungsbreite der Messwerte einen vorbestimmten Wert überschreitet. Auch bei diesem Verfahren wird von der Erkenntnis Gebrauch gemacht, dass Partikel oder feste Bestandteile in einer Schmelze die Ausbreitungsgeschwindigkeit von Schallwellen beeinflussen. Wie bereits ausgeführt, kann es während der Produktion aufgrund von örtlichen Überhitzungen zu lokalen Verbrennungen und Verkohlungen des Kunststoffmaterials kommen. Werden diese in das extrudierte Produkt eingetragen, wird es fehlerhaft. Für relativ einfache stranggeformte Kunststoffprodukte mag dies nicht bedeutsam sein. Für die Herstellung von Hochspannungskabeln, von Gas- oder Wasserrohren und dergleichen, können derartige Fehler nicht hingenommen werden. Mit Hilfe des erfindungsgemäßen Verfahrens ist es möglich, diese Fehler sofort zu erkennen und den Produktionsprozess zu stoppen, damit die gewünschte Qualität der Strangprodukte gewährleistet bleibt.

Wie bereits ausgeführt, lässt die Ausbreitungsgeschwindigkeit von Schallwellen in einer Kunststoffschmelze Rückschlüsse auf deren Temperatur zu, wenn bekannt ist, wie sich für spezielle Kunststoffe die Schallausbreitungsgeschwindigkeit in Abhängigkeit von der Temperatur verhält. Dies lässt sich durch vorangehende Messungen leicht feststellen. Die zuletzt beschriebenen erfindungsgemäßen Verfahren können mit der Temperaturmessung verknüpft werden, sodass nicht der Verlauf der Schallausbreitungsmesswerte ausgewertet wird, sondern der Verlauf der Temperaturwerte.

Eine Vorrichtung zur Durchführung des erfindungsgemäßen Verfahrens sieht ein rohrförmiges Adapterstück am Ausgang des Extruders vor, an dem radial ein Ultraschallsender und diametral dazu radial ein Ultraschallempfänger angeordnet sind. Die Sensoren sind in einer radialen Ausnehmung in der Wand des Adapterstücks angeordnet. Hat das Adapterstück beispielsweise eine Wanddicke von 10 mm, verbleibt durch die Ausnehmung eine Restwanddicke von z.B. 1 mm. Da die Ausbreitungsgeschwindigkeit von Schall in Stahl nahezu viermal so hoch ist wie die in der Kunststoffschmelze, spielt die Verfälschung der gemessenen Schallgeschwindigkeit durch die Restwandstärke der Ausnehmung eine untergeordnete Rolle. Außerdem ist es naturgemäß möglich, diesen Fehler zu korrigieren. Um mögliche Reflektionen und Brechungen an Unebenheiten zu minimieren, sieht eine Ausgestaltung der Erfindung vor, dass die Kontaktfläche im Boden der Ausnehmung poliert ist.

Die Erfindung soll nachfolgend anhand von Zeichnungen näher erläutert werden.

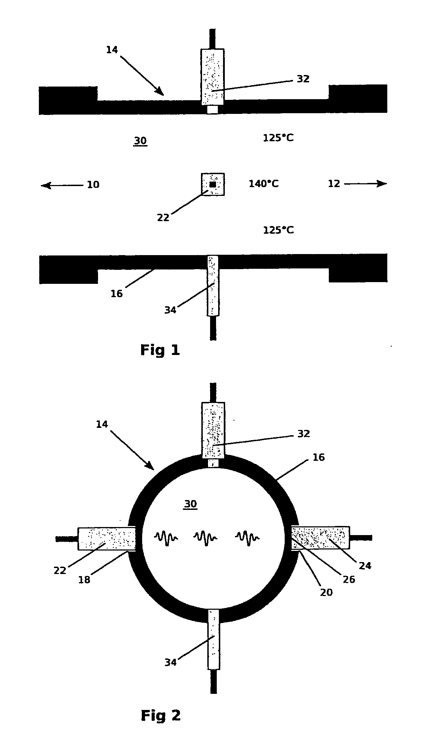

- Fig. 1: zeigt ein Adapterstück nach der Erfindung.
- Fig. 2: zeigt einen Schnitt durch das Adapterstück nach Fig. 1.

Zwischen dem vorderen Ende eines Extruders 10 und dem Extruderkopf 12 ist ein rohrförmiges Adapterstück 14 angeordnet. Der Extruder und auch die Anbringung des Adapterstücks sollen im Einzelnen nicht beschrieben werden. Die Anbringung des Adapterstücks kann auf einfache Weise mit bekannten Mitteln erfolgen. Durch die angegebenen Temperaturwerte 125°C bzw. 140°C soll die Extrusionstemperatur für Polyethylen angedeutet werden. LDPE variiert in seiner Temperatur zwischen 100°C und 200°C.

Das Adapterstück 14 weist eine zylindrische Wand 16 auf von z.B. einer Dicke von 10 mm. Diametral gegenüberliegend sind in der zylindrischen Wand 16 von außen Ausnehmungen 18 bzw. 20 eingearbeitet, in die Sonden 22 bzw. 24 eingesetzt sind. Die Sonde 22 enthält einen Ultraschallsender und die Sonde 24 einen Ultraschallempfänger. Die Ausnehmungen belassen eine Restwanddicke 26 von z.B. 1-2 mm. Der Boden der Ausnehmungen 18, 20 ist poliert, damit keine Reflektionen und unnötige Brechungen des Schallsignals auftreten. Mit Hilfe von Ultraschallsender und -empfänger wird die Schallgeschwindigkeit in einer Kunststoffschmelze 30 innerhalb des Adapterstücks 14 gemessen. Die Schallgeschwindigkeit für die Polyethylenschmelze beträgt z.B. 1500 m/s. Die Schallgeschwindigkeit in Stahl, aus dem das Adapterstück 14 gefertigt ist, beträgt etwa 5900 m/s. Daher ergibt die Schallgeschwindigkeitsmessung einen gewissen Fehler, hervorgerufen durch die Restwanddicke 26. Dieser spielt jedoch bei der Messung der mittleren Schallgeschwindigkeit der Schmelze eine untergeordnete Rolle und kann ggf. korrigiert werden.

Vor einer Temperaturmessung der Kunststoffschmelze wird für das jeweilige Kunststoffmaterial die Abhängigkeit der Schallgeschwindigkeit von der Temperatur des Kunststoffs bestimmt, die in dem relevanten Temperaturbereich zumeist linear ist. In einer Auswertevorrichtung wird diese Funktion gespeichert. Durch Messung der jeweiligen Schallgeschwindigkeiten kann daher aus der Funktion die jeweilige Temperatur ermittelt werden. Die Temperaturmessung erfolgt in Echtzeit, und es können daher umgehend Maßnahmen eingeleitet werden, eine Temperaturänderung herbeizuführen, falls die gemessene Temperatur von einem vorgegebenen Wert abweicht.

Die Schallgeschwindigkeit ist ihrerseits abhängig von dem Druck in der Schmelze. Um eine Temperaturmessung mit Hilfe der gemessenen Funktion zu ermöglichen, sollte daher auch der Druck in der Schmelze berücksichtigt werden. Zu diesem Zweck ist ein Drucksensor 32 dem Adapterstück 14 zugeordnet.

Mit Hilfe eines Thermoelements 34, das diametral dem Drucksensor 32 gegenüberliegend in der Wandung 16 angeordnet ist, lässt sich auch die Oberflächentemperatur der Schmelze 30 bestimmen, um bei bekanntem Strömungsprofil und der Kenntnis der mittleren Massetemperatur der Schmelze Rückschlüsse auf den Temperaturverlauf innerhalb des Rohrquerschnitts ziehen zu können.

Die Messung der Ausbreitungsgeschwindigkeit des Schalls bzw. auf diese Weise auch der Temperatur einer Schmelze kann nicht nur dazu verwendet werden, um eine Produktion möglichst nahe der oberen noch zulässigen Temperaturgrenze zu fahren, um den Ausstoß maximal zu halten, sondern auch dazu, den Beginn einer Extrusion zu steuern bzw. eine fehlerhafte Produktion zu stoppen. Eine Produktion sollte erst beginnen, wenn die Kunststoffschmelze am bzw. im Extruderkopf weitgehend homogen ist. Da eine inhomogene Kunststoffschmelze eine andere Ausbreitungsgeschwindigkeit des Schalls zur Folge hat als eine homogene, ist der gewählte Temperaturverlauf der Schmelze ein Hinweis dafür, ob die Homogenität erreicht worden ist. Zuvor würden sich in der Schmelze aufhaltende feste Teilchen zu Temperaturschwankungen führen, die normalerweise nicht auftreten dürften. Sobald der Temperaturverlauf eine stetige Tendenz hat, kann der Maschinenführer den Extruder zur Produktion freigeben. Dieses Verfahren hat den Vorteil, dass der Maschinenführer keine Proben mehr nehmen, sondern nur abwarten muss, bis das Material im oder am Extruderkopf homogen aufgeschmolzen ist.

Kommt es während der Produktion zu Schwankungen im Temperaturverlauf, die aus anderen Gründen nicht auftreten können, ist dies ein Zeichen für eine Inhomogenität des Materials, insbesondere aufgrund von Verbrennungsprodukten. Der Maschinenführer kann daher den Extruder abstellen und somit die Produktion fehlerbehafteter Produkte verhindernd. Es versteht sich, dass die Abschaltung des Extruders bzw. die Beendigung der Produktion auch automatisch vor sich gehen kann, indem eine Auswertevorrichtung die Schwankungsbreite der Temperaturmessungswerte ermittelt und für ein Abschaltsignal sorgt, wenn diese einen vorgegebenen Wert überschreitet.

## Patentansprüche

1. Verfahren zur Messung der Temperatur eines plastifizierten Kunststoffs am Ausgang eines Extruders, bei dem für mindestens ein plastifiziertes Kunststoffmaterial die Funktion der Schallgeschwindigkeit in Abhängigkeit von der Temperatur gemessen und gespeichert wird, während der Extrusion des Kunststoffmaterials mit Hilfe eines Ultraschallsenders (22) und eines dem Ultraschallsender (22) diametral gegenüberliegenden Ultraschallempfängers (24) die Schallgeschwindigkeit gemessen wird und aus den Geschwindigkeitsmesswerten und der Funktion die jeweilige Temperatur bestimmt wird, **dadurch gekennzeichnet, dass** in radialen Ausnehmungen (18, 20) in der Wand (16) eines rohrförmigen Adapterstücks (14) am Ausgang des Extruders ein Ultraschallsender (22) und ein Ultraschallempfänger (24) angeordnet sind, mit denen die Schallgeschwindigkeit über die von den radialen Ausnehmungen (18, 20) in der Wand (16) belassene Restwanddicke der Wand (16) hindurch gemessen wird und dass für mindestens ein plastifiziertes Kunststoffmaterial neben der Funktion der Schallgeschwindigkeit in Abhängigkeit von der Temperatur die Funktion der Schallgeschwindigkeit in Abhängigkeit von dem Druck gemessen und gespeichert wird, während der Extrusion des Kunststoffmaterials neben der Schallgeschwindigkeit der Druck gemessen wird und mit Hilfe des Druckmesswertes eine Druckkompensation der Temperaturmessung erfolgt.

2. Verfahren nach Anspruch 1, **dadurch gekennzeichnet, dass** die mittlere Schallgeschwindigkeit bestimmt wird und daraus die mittlere Massetemperatur bzw. die mittlere druckkompensierte Massetemperatur.

3. Verfahren nach Anspruch 1 oder 2, **dadurch gekennzeichnet, dass** die Produktion des Kunststoffstrangs gestartet wird, wenn der Verlauf der Messwerte im Wesentlichen eine stetige Tendenz hat oder im Wesentlichen konstant ist.

4. Verfahren nach einem der Ansprüche 1 bis 3, **dadurch gekennzeichnet, dass** die Produktion des Kunststoffstrangs gestoppt wird, wenn die Schwankungsbreite der Messwerte einen vorgegebenen Wert überschreitet.

5. Vorrichtung zur Messung der Temperatur eines plastifizierten Kunststoffs am Ausgang eines Extruders, mit einem rohrförmigen Adapterstück (14) am Ausgang des Extruders, an dem radial ein Ultraschallsender (22) und diametral gegenüberliegend dazu ein Ultraschallempfänger (24) angeordnet sind, **dadurch gekennzeichnet, dass** Ultraschallsender und -empfänger (22, 24) in radialen Ausnehmungen (18, 20) in der Wand (16) des Adapterstücks (14) angeordnet sind, wobei die radialen Ausnehmungen (18, 20) in der Wand (16) eine Restwanddicke der Wand (16) belassen, und wobei in der Wand (16) des Adapterstücks (14) ein Druckmessaufnehmer (32) angeordnet ist und die Restwanddicke der Rohrwandung so minimiert ist, dass zur Verringerung der Unschärfe des Signals im Bereich der Ultraschalleinkopplung nur ein geringer Teil der Rohrwandung des Adapterstücks schwingt, wobei die Vorrichtung dazu ausgebildet ist, für mindestens ein plastifiziertes Kunststoffmaterial die Funktion der Schallgeschwindigkeit in Abhängigkeit von der Temperatur zu messen und zu speichern, während der Extrusion des Kunststoffmaterials mit Hilfe des Ultraschallsenders (22) und des Ultraschallempfängers (24) die Schallgeschwindigkeit zu messen und aus dem Geschwindigkeitsmesswerten und der Funktion die jeweilige Temperatur zu bestimmen, und wobei die Vorrichtung weiter dazu ausgebildet ist, für mindestens ein plastifiziertes Kunststoffmaterial neben der Funktion der Schallgeschwindigkeit in Abhängigkeit von der Temperatur die Funktion der Schallgeschwindigkeit in Abhängigkeit von dem Druck zu messen und zu speichern, und während der Extrusion des Kunststoffmaterials mittels des Druckmessaufnehmers (32) neben der Schallgeschwindigkeit den Druck zu messen und mit Hilfe des Druckmesswertes eine Druckkompensation der Temperaturmessung vorzunehmen.

6. Vorrichtung nach Anspruch 5, **dadurch gekennzeichnet, dass** mit Hilfe der Ausnehmung (18, 20) die Restwanddicke derart gegenüber der Rohrwandung minimiert ist, dass eine seitliche Signalausbreitung in die Rohrwandung weitgehend unterdrückt und eine gute Signalverteilung in Einstrahlrichtung des Ultraschallsenders erzielt ist.

7. Vorrichtung nach Anspruch 5 oder 6, **dadurch gekennzeichnet, dass** der Boden der Ausnehmung (18, 20) poliert ist.

8. Vorrichtung nach einem der Ansprüche 5 bis 7, **dadurch gekennzeichnet, dass** in der Wand (16) des Adapterstücks (14) ein Thermoelement zur Messung der Oberflächentemperatur der Schmelze angeordnet ist.

## Claims

1. A method for measuring the temperature of a plasticized plastics at the exit of an extruder, in which the dependency function of the sound velocity on temperature is measured and memorized for at least one plasticized plastic material, the sound velocity is measured with the aid of an ultrasound sender (22) and an ultrasound receiver (24) diametrically opposite to the ultrasound sender (22) during the extrusion of the plastic material, and the respective temperature is determined from the measured velocity values and the function, **characterized in that** an ultrasound sender (22) and an ultrasound receiver (24) are arranged in radial recesses (18, 20) in the wall (16) of a pipe-shaped adapter piece (14) at the exit of the extruder, by which the sound velocity is measured across the residual wall thickness of the wall (16) that is left in the wall (16) by the radial recesses (18, 20), and that the dependency function of the sound velocity on the pressure is measured and memorized for at least one plasticized plastic material besides to the dependency function of the sound velocity on temperature, the pressure is measured besides to the sound velocity during the extrusion of the plastic material, and a pressure compensation of the temperature measurement is performed with the aid of the measurement value of the pressure.

2. The method according to claim 1, **characterized in that** the average sound velocity is determined, and derived from this the average bulk temperature or the average pressure-compensated bulk temperature.

3. A method according to claim 1 or 2, **characterized in that** the production of the strain of plastic material is started when the course of the measurement values has an essentially steady tendency or is essentially constant.

4. A method according to claim 1 to 3, **characterized in that** the production of the strain of plastic material is stopped when the range of deviation of the measurement values exceeds a predetermined value.

5. A device for measuring the temperature of a plasticized plastics at the exit of an extruder with a pipe-shaped adapter piece (14) at the exit of the extruder, on which an ultrasound sender (22) and an ultrasound receiver (24) are radially arranged diametrically opposite to each other, **characterized in that** ultrasound sender and - receiver (22, 24) are arranged in radial recesses (18, 20) in the wall (16) of the adapter piece (14), wherein the radial recesses (18, 20) in the wall (16) leave a residual wall thickness of the wall (16), and wherein a pressure sensor (32) is arranged in the wall (16) of the adapter piece (14) and the residual wall thickness of the pipe wall is minimized such that only a small part of the pipe wall of the adapter piece vibrates in order to reduce the uncertainty of the signal in the area of the ultrasound coupling, wherein the device is configured to measure and memorize the dependency function of the sound velocity on temperature for at least one plasticized plastic material, to measure the sound velocity with the aid of the ultrasound sender (22) and the ultrasound receiver (24) during the extrusion of the plastic material, and to determine the respective temperature from the measured values of the velocity and the dependency function, and wherein the device is furthermore configured to measure and memorize the dependency function of the sound velocity on pressure for at least one plasticized plastic material besides to the dependency function of the sound velocity on temperature, and to measure the pressure by way of the pressure sensor (32) besides to the sound velocity during the extrusion of the plastic material, and to perform a pressure compensation of the temperature measurement with the aid of the measurement value of the pressure.

6. The device according to claim 5, **characterized in that** with the aid of the recess (18, 20), the residual wall thickness is minimized with respect to the overall pipe wall thickness, such that a lateral signal propagation into the pipe wall is largely suppressed and a good signal distribution in the irradiation direction of the ultrasound sender is achieved.

7. A device according to claim 5 or 6, **characterized in that** the bottom of the recess (18, 20) is polished.

8. A device according to any one of claims 5 to 7, **characterized in that** a thermocouple for measuring the surface temperature of the melt is arranged in the wall (16) of the adapter piece (14).

## Revendications

1. Procédé pour mesurer la température d'un plastique plastifié dans la sortie d'une extrudeuse, chez lequel la fonction de dépendance de la vitesse du son de la température est mesurée et enregistrée pour au moins une matière plastique plastifiée, la vitesse du son est mesurée à l'aide d'un émetteur d'ultrasons (22) et un récepteur d'ultrasons (24) diamétralement opposé à l'émetteur d'ultrasons (22) pendant l'extrusion de la matière plastique, et la température respective est déterminée à partir des valeurs de la vitesse mesurées et de la fonction, **caractérisé en ce que** un émetteur d'ultrasons (22) et un récepteur d'ultrasons (24) sont arrangés dans des évidements radiaux (18, 20) dans la paroi (16) d'une pièce adaptateur tubulaire (14) dans la sortie de l'extrudeuse, par lesquels la vitesse du son est mesurée à travers l'épaisseur de paroi résiduelle de la paroi (16) laissée dans la paroi (16) par les évidements radiaux (18, 20), et que la fonction de dépendance de la vitesse du son de la pression est mesurée et enregistrée pour au moins une matière plastique plastifiée en plus de la fonction de dépendance de la vitesse du son de la température, la pression est mesurée en plus de la vitesse du son pendant l'extrusion de la matière plastique, et une compensation de pression de la mesure de température est faite à l'aide de la valeur de mesure de pression.

2. Procédé selon la revendication 1, **caractérisé en ce que** la vitesse du son moyenne est déterminée, et à partir de cela la température de masse moyenne ou respectivement la température de masse compensée à pression moyenne.

3. Procédé selon la revendication 1 ou 2, **caractérisé en ce que** la production du cordon en matière plastique est commencée quand le cours des valeurs de mesure a une tendance essentiellement continue ou est essentiellement constant.

4. Procédé selon la revendication 1 à 3, **caractérisé en ce que** la production du cordon en matière plastique est stoppée quand la largeur de déviation des valeurs de mesure excède une valeur prédéterminée.

5. Dispositif pour mesurer la température d'un plastique plastifié dans la sortie d'une extrudeuse, avec une pièce adaptateur tubulaire (14) dans la sortie de la extrudeuse, sur laquelle un émetteur d'ultrasons (22) et un récepteur d'ultrasons (24) sont radialement arrangés diamétralement opposés l'un à l'autre, **caractérisé en ce que** l'émetteur d'ultrasons et le récepteur (22, 24) sont arrangés en des évidements radiaux (18, 20) dans la paroi (16) de la pièce adaptateur (14), les évidements radiaux (18, 20) dans la paroi (16) laissant une épaisseur de paroi résiduelle de la paroi (16), et chez lequel un manomètre (32) est arrangé dans la paroi (16) de la pièce adaptateur (14) et l'épaisseur de paroi résiduelle de la paroi de tube est faite minimale de sorte que seulement une petite partie de la paroi de tube de la pièce adaptateur oscille afin de réduire l'indécis du signal dans la région du couplage ultrasonique, le dispositif étant configuré à mesurer et enregistrer la fonction de dépendance de la vitesse du son de la température pour au moins une matière plastique plastifiée, à mesurer la vitesse du son à l'aide de l'émetteur d'ultrasons (22) et du récepteur d'ultrasons (24) pendant l'extrusion de la matière plastique, et à déterminer la température respective à partir des valeurs de mesure de la vitesse et de la fonction, et chez lequel le dispositif est en outre configuré à mesurer et enregistrer la fonction de dépendance de la vitesse du son de la pression pour au moins une matière plastique plastifiée en plus de la fonction de dépendance de la vitesse du son de la température, et à mesurer la pression en plus de la vitesse du son pendant l'extrusion de la matière plastique au travers du manomètre (32), et à faire une compensation de pression de la mesure de température à l'aide de la valeur de mesure de pression.

6. Dispositif selon la revendication 5, **caractérisé en ce que** à l'aide de l'évidement (18, 20), l'épaisseur de paroi résiduelle est faite minimale par rapport à l'épaisseur de tube, de sorte qu'une propagation de signal latérale dans la paroi de tube est largement supprimée et une bonne distribution de signal dans la direction d'irradiation de l'émetteur d'ultrasons est achevée.

7. Dispositif selon la revendication 5 ou 6, **caractérisé en ce que** le fonds de l'évidement (18, 20) est poli.

8. Dispositif selon l'une quelconque des revendications 5 à 7, **caractérisé en ce que** un couple thermoélectrique pour mesurer la température de surface de la masse fondue est arrangé dans la paroi (16) de la pièce adaptateur (14).
